# NEUE EUROPÄISCHE PATENTSCHRIFT

(11) **EP 1 173 523 B2**
(45) Veröffentlichungstag und Bekanntmachung des Hinweises auf die Entscheidung über den Einspruch: **14.08.2013**
(45) Hinweis auf die Patenterteilung: 04.01.2006
(21) Anmeldenummer: 01915038.2
(22) Anmeldetag: 24.02.2001
(51) Int. Cl.: C09D 7/12, C09C 1/30, B32B 27/00

(54) **VERFAHREN ZUR HERSTELLUNG EINES SCHICHTWERKSTOFFS UND SO ERHALTENER SCHICHTWERKSTOFF**
METHOD FOR PRODUCING A LAYERED MATERIAL AND LAYERED MATERIAL THUS OBTAINED
PROCEDE DE PRODUCTION DE MATIERE STRATIFIEE ET MATIERE STRATIFIEE AINSI OBTENUE

(30) Priorität: 29.02.2000 DE 10009690; 06.10.2000 DE 10049452
(43) Veröffentlichungstag der Anmeldung: 23.01.2002
(73) Patentinhaber: Aluminium Féron GmbH & Co., 52355 Düren (DE)
(72) Erfinder: HÖLS, Lothar, 52355 Düren (DE); HIRT, Klaus, 52072 Aachen (DE); F RON, Berthold, 52372 Kreuzau Bergheim (DE)
(74) Vertreter: Hauck Patent- und Rechtsanwälte
(86) Internationale Anmeldenummer: PCT/DE2001/000728
(87) Internationale Veröffentlichungsnummer: WO 2001/064796

(56) Entgegenhaltungen:
- EP-A- 0 475 132
- EP-A2- 1 195 417
- DE-A- 4 402 370
- DE-A- 4 419 234
- US-A- 4 822 828

## Beschreibung

Die vorliegende Erfindung betrifft ein Verfahren zur Herstellung eines aus einem Substrat und mindestens einer Schicht bestehenden Werkstoffes, bei dem die Schicht aus einem modifizierten Kunstharz besteht. Die Erfindung betrifft ferner einen durch ein derartiges Verfahren hergestellten Werkstoff.

Lacke lassen sich auf Substrate, beispielsweise Kunststoff, Holz, aufbringen, um Schichtwerkstoffe herzustellen. Solche Schichtwerkstoffe sollen eine möglichst hohe Kratzfestigkeit bzw. Abriebfestigkeit aufweisen. Hierzu ist es bekannt, die Lacke entsprechend zu modifizieren, beispielsweise ein anorganisches Netzwerk in diese einzubauen.

Aus der DE 44 19 234 A ist ein Herstellverfahren bekannt, bei dem ein schwerflüchtiges Silylierungsmittel feinstteiligen anorganischen Oxiden flüssig in Form eines feinstzerstäubten Aerosols zugemischt wird. Die auf diese Weise erhaltene hoch unpolare pyrogene Kieselsäure kann dann in entsprechenden Harzsystemen als Verdickungsmittel eingesetzt werden. Bei diesem Verfahren wird somit zuerst die "umhüllte" Kieselsäure hergestellt und danach in das Kunstharz eingeführt.

Bei dem aus der DE 44 02 370 A bekannten Verfahren wird Kieselsäure mit einem Organosilan besprüht. Die auf diese Weise hergestellte modifizierte Kieselsäure kann dann in Harzsystemen als Verdickungsmittel eingesetzt werden. Auch hier findet somit ein aus zwei Schritten bestehendes Verfahren Anwendung.

Der Erfindung liegt die Aufgabe zugrunde, ein Verfahren zur Verfügung zu stellen, mit dem sich aus einem Substrat und mindestens einer Schicht bestehende Werkstoffe auf einfache Weise mit einer besonders hohen Kratzfestigkeit bzw. Abriebfestigkeit herstellen lassen.

Diese Aufgabe wird erfindungsgemäß durch ein Verfahren gemäß Patentanspruch 1 gelöst.

Das erfindungsgemäße Verfahren zeichnet sich somit dadurch aus, daß ein modifiziertes Kunstharz hergestellt wird, das ein Reaktionsprodukt aus einem anorganischen Oxid mit einer Teilchengröße mindestens im Nanobereich und einem Silan enthält, wobei dieses Reaktionsprodukt einen organischen Rest R' aufweist, der keiner Polymerisations-, Polyadditions- oder Polykondensationsreaktion zugänglich ist.

Zur Modifikation von derartigen Lacken (Kunstharzen) ist bereits vorgeschlagen worden, amorphe Kieselsäuren mit bereits vorhandenen Netzwerken zu verwenden, deren Teilchengröße im Nanometerbereich liegt. Auf der Oberfläche dieser Teilchen befinden sich Siloxan und Silanolgruppen, die einer chemischen Reaktion zugänglich sind. Mit verschiedenen Silanen und Silazanen läßt sich die Oberfläche der Nanoteilchen durch eine Reaktion chemisch modifizieren. Beispielsweise läßt sich durch eine Reaktion der Silanolgruppen mit organofunktionellen Silanen eine Oberflächenmodifizierung der Nanoteilchen erreichen. Die Bifunktionalität der organofunktionellen Silane erlaubt sowohl eine Reaktion mit organischen Materialien als auch eine Reaktion mit anorganischen Materialien und ruft somit eine Organophilierung der Teilchen hervor. Während die Alkoxygruppe unter Alkoholabspaltung eine Bindung zur Kieselsäurenoberfläche eingeht, ist die Doppelbindung beispielsweise des Vinyltriethoxysilans einer radikalischen Polymerisation zugänglich und wird durch Strahlenhärtung oder thermische Umsetzung in Verbindung mit geeigneten Initiatoren in ein resultierendes Netzwerk von Polyacrylaten derart eingebaut, daß verbesserte Oberflächeneigenschaften, beispielsweise in Hinsicht auf Kratzfestigkeit, erzielt werden.

Zeigen Verbundmaterialien, deren oberste Schicht aus einem radikalisch polymerisierten Acrylatsystem besteht, Kratzfestigkeiten nach DIN 53799, Abschnitt 4.15, die weit unterhalb 1N liegen, können nach diesem Verfahren Kratzfestigkeitswerte erreicht werden, die je nach Verbundwerkstoff den zehnfachen Wert erreichen.

Weitere Versuche haben nun gezeigt, daß überraschenderweise eine Einbindung des organophilen Teils des Silanmoleküls in ein organisches Netzwerk nicht erfolgen muß, um verbesserte Oberflächeneigenschaften zu erzielen. Diese Erkenntnis wird erfindungsgemaß genutzt, indem ein modifiziertes Kunstharz hergestellt wird, bei dem das anorganische Oxid an eine Struktur der Formel (Meo)ₓSiR' gebunden ist, worin R' einen organischen Rest darstellt, der keiner Polymerisations-, Polyadditions- oder Polykondensationsreaktion zugänglich ist. Damit ist sichergestellt, daß keine chemische Einbindung dieses organischen Restes in das Basiskunstharz beim Aushärten desselben erfolgt. Vielmehr liegt eine rein physikalische Mischung zwischen dem Basiskunstharz und den Partikeln aus dem anorganischen Oxid vor.

Es ist also zur Erzielung verbesserter Oberflächeneigenschaften erfindungsgemäß gerade nicht vorgesehen, daß die organophilen Reste des umgesetzten Silans chemisch in die Kunstharzmatrix der Beschichtungsmasse eingebaut werden. Basis der Erfindung ist, daß über den Stand der Technik hinaus, welcher über eine chemische Einbindung des organophilen Silanrestes in die Kunstharzmatrix verbesserte Oberflächeneigenschaften erzielt, erfindungsgemäß eine chemische Einbindung nicht notwendig ist. Insbesondere ist erfindungsgemäß das Vorhandensein einer einer radikalischen Härtung zugänglichen Doppelbindung beim Rest R' zur Erzielung verbesserter Oberflächeneigenschaften nicht erforderlich.

Derartige Beschichtungsmassen können nach den üblichen Verfahren modifiziert werden. Es können geeignete Kieselsäuren, deren Partikelgrößen mindestens im Nanometerbereich liegen, zur Umsetzung herangezogen werden. Die Beschichtungsgemische können zwecks Mattierung mit weiteren Kieselsäuren modifiziert werden oder mit Farbstoffen zur Erzielung farblicher Effekte eingefärbt werden. Zusatzmittel zur Verlaufsverbesserung können ebenso zugesetzt werden wie bekannte Zusatzstoffe zur Erhöhung der Abriebfestigkeit.

Je nach Auswahl der Harzmatrix können diese mit verbesserten Oberflächeneigenschaften versehenen Beschichtungen direkt auf Substrate zur Erzielung von Schichtwerkstoffen aufgetragen werden. Die Harzmatrix kann beispielsweise durch die bekannten Polymerisationsreaktionen nach dem Auftragen der Beschichtungsmasse erstellt oder modifiziert werden. Auch können Schichtwerkstoffe erstellt werden, welche über einen Mehrschichtaufbau unterschiedlicher Beschichtungsmassen zusätzliche Eigenschaftsbilder, beispielsweise hinsichtlich eines dekorativen Charakters durch Mehrfarbenaufbau, hinsichtlich möglicher verbesserungswürdiger Bewitterungseigenschaften oder Chemikalienbeständigkeiten, und weitere denkbare Eigenschaften zeigen. Auch die eingesetzten Substrate können nach Belieben einschichtig oder mehrschichtig sein. Die. Beschichtungsmassen können sowohl einseitig oder beidseitig auf die gewählten Substrate aufgebracht werden.

Die aufgetragenen Schichten können, je nach Harzzusammensetzung, sowohl radikalisch oder ionisch als auch über Kondensationsreaktionen oder über Additionsreaktionen gehärtet werden. Darüber hinaus können Schichtwerkstoffe, die wie beschrieben hergestellt werden, ebenso durch eine Hybridhärtung, also beispielsweise einer Kombination aus radikalischer Härtung und thermischer Härtung oder über eine Kombination aus radikalischer Härtung und Härtung über Additionsreaktionen usw., hergestellt werden. Die Aushärtung bezieht sich immer nur auf das Basisharz. Eine chemische Reaktion der zur Modifaktion verwendeten Teilchen mit dem Basisharz erfolgt nicht.

Anstelle der nanodispersen Kielselsäure können auch andere Oxide, wie beispielsweise Zirkonoxide und Aluminiumoxide, Einsatz finden. Ebenso beschränkt sich das beschriebene Verfahren nicht auf den Einsatz von Nanopartikeln aus Siliciumoxid oder anderen Oxiden, welche über ein oder mehrere Sauerstoffatome kovalent an einem Siliciumatom des Silans gebunden sind, sondern auch hier kann anstelle des Si-Atoms ein anderes Element, beispielsweise Aluminium oder Zirkonium, Einsatz finden.

Die Erfindung wird nachfolgend anhand von Ausführungsbeispielen im einzelnen erläutert.

### Beispiel 1

In einem entsprechenden Gefäß werden 28,06 kg Sartomer 494® (Acrylharz, Firm Cray Valley) und 0,048 kg 4-Hydroxyanisol vermischt und auf 60-70 °C erwärmt. Zu dieser Vorlage gibt man eine Lösung von 0,15 kg Maleinsäureanhydrid (Katalysator) und 0,0536 kg Natriumdodecylsulfat (Tensid) in 1,073 kg Wasser und innerhalb von 30 Minuten 3,725 kg Propyltriethoxysilan (PTEOS). Anschließend dosiert man im angegebenen Temperaturbereich unter intensivem Rühren 8,965 kg Aerosil 200® (SiO₂) innerhalb einer Stunde. Man rührt noch drei Stunden weiter. Anschließend wird der Ansatz schnell auf Raumtemperatur heruntergekühlt, der Lack mit Ethylacetat verdünnt und 3 % Photoinitiator (Darocure 1173® der Ciba Spezialitätenchemie) hinzugefügt. Auf diese Weise wird eine Komponente A hergestellt.

Eine PVC-Platte von 3 mm Dicke wird mit der Komponente A beschichtet, und die Beschichtung wird einer radikalischen Polymerisation mittels UV-Strahlung unterworfen. Eine zweite PVC-Platte wird nur mit Sartomer 494® beschichtet und analog mit dem Photoinitiator versehen. Das Auftragsgewicht wird der Beschichtung der ersten Platte angeglichen. Beide Beschichtungsstärken betragen 25 µm. Die Beschichtung der zweiten Platte wird ebenfalls einer radikalischen Polymerisation mittels UV-Strahlung unterzogen.

Beide Platten mit polymerisierten Beschichtungen werden einem Kratztest nach EN 438.2 unterworfen. Während die Kratzfestigkeit bei der zweiten PVC-Platte (Harz Sartomer 494®) bei etwa 1,2 N liegt, hat die Beschichtung der ersten Platte (Komponente A) eine Kratzfestigkeit von 2,5 N. Hieraus resultiert, daß nach Aushärten des erfindungsgemäß ausgebildeten Lacks eine wesentlich bessere Kratzfestigkeit resultiert als nach Aushärten eines herkömmlichen Lacks.

### Beispiel 2

Ein Aluminiumhartband der Stärke 100 µm wird mit einem Lack auf der Basis Desmodur A 450® (OH-Komponente, Bayer AG), gemischt mit der äquivalenten Menge einer Isocyanatkomponente (Desmophen N75®, Bayer AG), derart beschichtet, daß ein Auftragsgewicht von 20 g/m² resultiert. Die in der Beschichtung vorhandenen Lösungsmittel werden so lange einer Trocknung bei 120 °C unterworfen, bis alle Lösungsmittel verdunstet sind.

In einem weiteren Versuch werden in Komponente A aus Beispiel 1 das radikalisch vernetzende Sartomer 494® durch ein OH-funktionelles Acrylharz ersetzt und der Photoinitiator entfernt. Ferner werden die Ethoxygruppen des PTEOS durch Methoxygruppen ersetzt. Auf diese Weise wird eine Komponente B erhalten. Die Komponente B wird zusätzlich mit 25 % Desmophen A 450® und äquivalenter Menge Desmodur N 75® versetzt, mit Ethylacetat verdünnt und ebenfalls auf ein Aluminiumband aufgetragen, wonach die Lösungsmittel verdunstet werden.

Beide beschichtete Aluminiumfolien werden nach einer Reaktionszeit von 6 Tagen mit einem Rückseitenprimer versehen und gegen phenolharzgetränkte Papiere unter 90 hPa Druck bei einer Temperatur von 145 °C über eine Dauer von 15 Minuten verpreßt. Die hieraus resultierenden beiden Schichtwerkstoffe werden dem Kratztest nach EN 438.2 unterworfen. Während die Schicht ohne Komponente B eine Kratzfestigkeit von 0,3 N aufwies, hatte die mit der Komponente B versehene Schicht eine Kratzfestigkeit von 2 N. Damit wurden die Ergebnisse von Beispiel 1 auch bei einem durch eine Additionsreaktion aushärtenden Basiskunstharzsystem bestätigt.

### Beispiel 3

Ein mit einem Epoxi-Melaminharzsystem (Auftragsgewicht ca. 5 g/m²) beschichtetes Aluminiumhartband wird auf der bereits lackierten Seite mit einem Überlack folgender Zusammensetzung versehen: Komponente A 59,7 g, Ethylacetat 50,85 g, Epikote 1001® 16, 95 g, Maprenal MF 980® 16, 95 g, Säurekatalysator 0,2 g, Syloid ED 50® 3,5 g/m².

Anstelle eines Photoinitiators werden 0,1 g eines thermischen Initiators (V65® der Firma Wako) dem Ansatz zugesetzt. Der Lack wird 45 s bei 250 °C ausgehärtet. Die Rückseite einer Alufolie wird mit einem Primer zur Verpressung gegen phenolharzgetränkte Kernpapiere versehen, und der Schichtwerkstoff nach dem in Beispiel 2 beschriebenen Verfahren erstellt. Die lackierten Aluminiumoberflächen werden hinsichtlich der Kratzfestigkeit nach EN 438.2 überprüft. Während das Ausgangsmaterial einen Wert von 0,2 N aufwies, konnte der Wert des mit PTEOS und Kieselsäure modifizierten Lacks auf 2 N gesteigert werden.

Vergleichbare Ergebnisse werden auch erzielt, wenn die in der Formulierung befindlichen Lösungsmittel bei geringer Temperatur entfernt werden, der thermische Initiator durch einen Photoinitiator ersetzt und die Beschichtung durch UV-Strahlung vernetzt wird. Somit sind sowohl die thermische Härtung als auch die Härtung durch UV-Strahlung und Kombinationen daraus für die Erfindung anwendbar.

## Patentansprüche

1. Verfahren zur Herstellung eines aus einem Substrat und mindestens einer Schicht bestehenden Werkstoffes, bei dem die Schicht aus einem modifizierten Kunstharz besteht, mit den folgenden Schritten:
a. Bereitstellen eines flüssigen Kunstharzes, eines anorganischen Oxides mit einer Teilchengröße mindestens im Nanobereich und eines Silans mit einem organischen Rest R', der keiner Polymerisations-, Polyadditions- oder Polykondensationsreaktion zugänglich ist;
b. Vermischen der Bestandteile unter Erhitzen und säurekatalytischer Behandlung zur Herstellung des modifizierten Kunstharzes, das ein Reaktionsprodukt enthält, in dem das anorganische Oxid über mindestens eine kovalente Bindung an eine Struktur der Formel (MeO)ₓSiR' gebunden ist,
worin Me für Si, Al oder Zr steht,
x 0-3 bedeutet,
R' die obige Bedeutung besitzt und
die freien Valenzen von Me an ein weiteres Sauerstoffatom oder eine Alkoxygruppe gebunden sind;
c. Auftragen des modifizierten Kunstharzes auf das Substrat; und
d. Aushärten des modifizierten Kunstharzes auf bekannte Weise.

2. Verfahren nach Anspruch 1, **dadurch gekennzeichnet, daß** als anorganisches Oxid Siliciumdioxid, Zirconoxid oder Aluminiumoxid bereitgestellt wird.

3. Verfahren nach Anspruch 1 oder 2, **dadurch gekennzeichnet, daß** ein flüssiges Kunstharz verwendet wird, das radikalisch oder ionisch oder über Kondensationsreaktionen, Additionsreaktionen oder über Kombinationen hiervon aushärtbar ist und durch Strahlungshärtung, thermische Härtung oder Kombinationen hiervon ausgehärtet wird.

4. Werkstoff, hergestellt durch das Verfahren nach einem der vorangehenden Ansprüche.

5. Werkstoff nach Anspruch 4, **dadurch gekennzeichnet, daß** das Auftragsgewicht des modifizierten Kunstharzes auf dem Substrat 5-100 g/m² beträgt.

## Claims

1. A method for producing a material consisting of a substrate and at least one layer, wherein the layer consists of a modified synthetic resin, comprising the following steps:
a. providing a liquid synthetic resin, an inorganic oxide having a particle size of at least in the nano range and a silane with an organic radical R' which is not susceptible to a polymerisation reaction, polyaddition reaction or polycondensation reaction;
b. mixing the components with heating and acid catalytic processing for the production of the modified synthetic resin containing a reaction product in which the inorganic oxide is bonded to a structure of the formula (MeO)ₓSiR' through at least one covalent bond,
wherein Me means Si, Al or Zr,
x means 0-3,
R' has the meaning of above and
the free valences of Me are bonded to another oxygen atom or an alkoxy group;
c. applying the modified synthetic resin onto the substrate; and
d. curing the modified synthetic resin in a known manner.

2. The method according to claim 1, **characterized in that** silicon dioxide, zirconium oxide or aluminum oxide are provided as inorganic oxide.

3. The method according to claim 1 or 2, **characterized in that** a liquid synthetic resin is used which is adapted to be cured radically or ionically or by condensation reactions, addition reactions or combinations thereof and is cured by radiation curing, thermal curing or combinations thereof.

4. A material procuced by the method according to one of the preceding claims.

5. The material according to claim 4, **characterized in that** the application weight of the modified synthetic resin on the substrate is 5-100 g/m².

## Revendications

1. Procédé de fabrication d'un matériau constitué d'un substrat et d'au moins une couche, dans lequel la couche est constituée d'une résine synthétique modifiée, ledit procédé comprenant les étapes suivantes :
a. la préparation d'une résine synthétique liquide, d'un oxyde inorganique avec une taille particulaire se situant au moins dans la plage des nanomètres et d'un silane ayant un radical organique R', qui n'est pas accessible à une réaction de polymérisation, de polyaddition ou de polycondensation;
b. le mélange des composants par chauffage et par traitement catalytique acide pour fabriquer la résine synthétique modifiée, qui contient un produit réactionnel dans lequel l'oxyde inorganique est lié par au moins une liaison covalente à une structure de formule (MeO)ₓSiR',
dans laquelle :
Me représente Si, Al ou Zr,
x est 0 à 3,
R' a la signification précitée et
les valences libres de Me sont liées à un autre atome d'oxygène ou à un groupement alcoxy;
c. l'application de la résine synthétique modifiée sur le substrat; et
d. le durcissement, de manière connue, de la résine synthétique modifiée.

2. Procédé selon la revendication 1, **caractérisé en ce que** l'on utilise comme oxyde inorganique du dioxyde de silicium, de l'oxyde de zirconium ou de l'oxyde d'aluminium.

3. Procédé selon la revendication 1 ou 2, **caractérisé en ce que** l'on utilise une résine synthétique liquide, que l'on peut durcir par voie radicalaire ou ionique ou via des réactions de condensation, des réactions d'addition ou leurs combinaisons et dont on effectue le durcissement par rayonnement, à la chaleur ou leurs combinaisons.

4. Matériau fabriqué par le procédé selon l'une quelconque des revendications précédentes.

5. Matériau selon la revendication 4, **caractérisé en ce que** le poids d'application de la résine synthétique modifiée sur le substrat est de 5 à 100 g/m².
